# EUROPÄISCHE PATENTSCHRIFT

(11) **EP 1 731 552 B1**
(45) Veröffentlichungstag und Bekanntmachung des Hinweises auf die Patenterteilung: **17.12.2008**
(21) Anmeldenummer: 06017300.2
(22) Anmeldetag: 02.10.2003
(51) Int. Cl.: C08J 9/00, C08J 9/232, C08J 3/20

(54) **Dämmender geschäumter Werkstoff**
Insulating foamed material
Matériau éxpansé isolant

(30) Priorität: 20.01.2003 TR 200300056; 15.05.2003 DE 20307608 U
(43) Veröffentlichungstag der Anmeldung: 13.12.2006
(62) Teilanmeldung aus: 03756475.4
(73) Patentinhaber: Deutsche Amphibolin-Werke von Robert Murjahn Stiftung & Co KG, 64372 Ober-Ramstadt (DE)
(72) Erfinder: Jager, Jürgen, 65396 Walluf (DE); Wagner, Frank, 69483 Wald-Michelbach (DE); Schmitt, Günter, 69514 Laudenbach (DE); Treiber, Christian, 55618 Simmertal (DE)
(74) Vertreter: Pfenning, Meinig & Partner GbR

(56) Entgegenhaltungen:
- WO-A-98/51735
- GB-A- 1 365 066
- US-A- 5 021 463
- DATABASE WPI Section Ch, Week 199717 Derwent Publications Ltd., London, GB; Class A32, AN 1997-180468 XP002266489 & CN 1 093 646 A (FANG W) 19. Oktober 1994 (1994-10-19)

## Beschreibung

Die Erfindung betrifft einen dämmenden geschäumten Werkstoff, der aus pigmentierten und pigmentfreien expandierbaren Styrolpolymerisatpartikeln hergestellt worden ist. Der erfindungsgemäße Werkstoff ist insbesondere in Plattenform vorteilhaft für die Wärmedämmung und dementsprechend für Isolationszwecke an Gebäuden oder auch für andere Applikationen geeignet. Außerdem kann mit dem erfindungsgemäßen Werkstoff auch eine verbesserte Schalldämmung erreicht werden.

Werkstoffe die aus expandierbaren Styrolpolymerisatpartikel gebildet werden, sind an sich nach dem Stand der Technik bekannt. Bei der Herstellung werden dabei expandierbare Partikel, die auch vorexpandiert sein können innerhalb von so genannten Dampfkammern aufgeschäumt, wobei zumindest eine weitere Expansion der Partikel auftritt. Gleichzeitig tritt eine Verschweißung und Verklebung der entsprechend aufgeschäumten Partikel miteinander auf. Nach einer Abkühlung kann ein so hergestellter Werkstoff aus der Dampfkammer entnommen werden.

Häufig erfolgt die Herstellung solcher Werkstoffe auch innerhalb von Formen, die in die Dampfkammern eingesetzt werden können, so dass auch eine bestimmte Formgebung eines Körpers, der aus einem solchen Werkstoff hergestellt worden ist, erreicht werden kann.

Es werden auch größere Blöcke aus solchen Werkstoffen hergestellt. Diese großformatigen Blöcke können nachfolgend in dünnere Platten zerschnitten werden.

Ein wesentliches Bewertungskriterium für solche Styropor-Werkstoffe ist die physikalische Dichte, wobei mit erhöhten physikalischen Dichten auch eine erhöhte mechanische Festigkeit erreichbar ist, was neben der Bruch-, Druck- auch die Zugfestigkeit betrifft.

Daneben spielt die Wärmeleitfähigkeit eines solchen Werkstoffes eine wesentliche Rolle. Da die Wärmeleitfähigkeit dichteabhängig ist, führt eine Erhöhung der physikalischen Dichte des Werkstoffes zu einer Erniedrigung der Wärmeleitfähigkeit.

Aus Gründen der Materialeinsparung ist es angestrebt, dass Werkstoffe, insbesondere Platten mit einer geringen Dichte hergestellt werden. Derartige Platten z. B. mit einer Dichte von 15 g/l weisen dann aber eine Wärmeleitfähigkeit auf, die nicht den Anforderungen der Wärmeleitklasse 035 (nach DIN 18164) entspricht. Eine Einordnung eines Werkstoffes in diese Wärmeleitklasse ist aber wünschenswert.

Es hat deshalb nicht an Versuchen gefehlt, hier durch Pigmentierung der expandierbaren Styrolpolymerisate eine Abhilfe zu schaffen. In der EP 0 981 574 B1 sind Graphitpartikel enthaltende expandierbare Styrolpolymerisate beschrieben. Diese Styrolpolymerisate die Graphitpartikel in einer homogenen Verteilung enthalten, zeigen dann, wenn hieraus Schaumstoffe hergestellt werden, eine gute Wärmeisolierung. Nach der Lehre der EP 0 981 574 B1 weisen derartige Schaumstoffe bei einer Dichte von 10 g/l eine Wärmeleitfähigkeit auf, die unter 35 mW/m x k liegt.

Im praktischen Gebrauch hat es sich nun aber gezeigt, dass dann, wenn Platten aus diesem Werkstoff z. B. einer längeren Wärmeeinstrahlung ausgesetzt werden, eine unkontrollierte irreversible thermische Formveränderung erfolgen kann. Diese Formveränderung kann sich insbesondere dann ungünstig auswirken, wenn die Platten zur Wärmedämmung an der Außenfassade eingesetzt werden. Hierbei können sich dann an den Stossstellen Spalten zwischen den Platten bilden. Diese Spalten führen u. a. auch dazu, dass bei einem darüber aufgebrachten Armierputz eine Rissbildung eintreten kann.

Ausgehend hiervon ist es deshalb die Aufgabe der vorliegenden Erfindung, einen dämmenden geschäumten Werkstoff zur Verfügung zu stellen, der in seinen physikalischen Eigenschaften insbesondere in Bezug auf die Wärmeleitfähigkeit und der Dichte im Wesentlichen dem entspricht, wie er in der vorstehend erwähnten europäischen Patentschrift 0 981 574 B1 beschrieben ist, der aber andererseits unter thermischer Beanspruchung keine oder nur geringfügige Veränderungen in der Form aufweist.

Erfindungsgemäß wird die Aufgabe mit einem dämmenden geschäumten Werkstoff der die Merkmale des Anspruches 1 aufweist, gelöst. Vorteilhafte Ausgestaltungen und Weiterbildungen der Erfindung können mit den in den untergeordneten Ansprüchen bezeichneten Merkmalen erreicht werden.

Erfindungsgemäß wird somit vorgeschlagen, dass der dämmende geschäumte Werkstoff aus expandierbaren Pigment enthaltenden und pigmentfreien Styrolpolymerisatpartikel gebildet ist. Überraschenderweise konnte die Anmelderin aufzeigen, dass ein Werkstoff und daraus hergestellte Schaumstoffplatten dann, wenn er gleichzeitig pigmentierte und nicht pigmentierte Styrolpolymerisatpartikel enthält, eine Wärmeleitfähigkeit, bei einer Rohdichte < 30 g/l, aufweist die der entspricht, wie sie bisher von den pigmentierten, insbesondere von den Graphit enthaltenden Schaumstoffplatten bekannt war. Gleichzeitig weisen aber die Werkstoffe die erfindungsgemäß aus den gemischten Styrolpolymerisatpartikeln aufgebaut sind, nahezu keine irreversiblen thermischen Formveränderungen auch unter längerer thermischer Beanspruchung, auf.

Der erfindungsgemäße Werkstoff weist dabei bevorzugt 10 bis 90 Gew.-% pigmentierte Styrolpolymerisatpartikel und 90 bis 10 Gew.-% pigmentfreie Styrolpolymerisatpartikel auf. Besonders bevorzugt ist es, wenn der Werkstoff mindestens 30 Gew.-% pigmentierte Styrolpolymerisatpartikel enthält. Besonders gute Ergebnisse werden dann erreicht, wenn ca. 50 Gew.-% pigmentierte und 50 Gew.-% pigmentfreie Styrolpolymerisatpartikel im Werkstoff eingesetzt werden.

Aus stofflicher Sicht sind bei den Pigmenten der Pigment enthaltenden Styrolpolymerisatpartikel insbesondere Ruß, Metalloxide, Metallpulver, Farbstoffpigmente und/oder Graphit bevorzugt. Ganz besonders bevorzugt sind Pigment enthaltende Styrolpolymerisatpartikel wie sie in der EP 0 981 574 B1 beschrieben sind.

Der erfindungsgemäße Werkstoff kann in Form von Platten oder Blöcken ausgebildet sein und dementsprechend für dämmende Einsatzzwecke eingesetzt werden. Ein besonders bevorzugter Einsatz ist die Wärmedämmung und hier insbesondere die Wärmedämmung an Gebäuden.

In einer vorteilhaften Ausführung der Erfindung ist es vorgesehen, dass die pigmentierten Styrolpolymerisatpartikel unregelmäßig.im Werkstoff verteilt angeordnet sind. Es besteht aber auch die Möglichkeit, die pigmentierten Styrolpolymerisatpartikel in systematischer Form innerhalb des Werkstoffes anzuordnen.

Weiterhin besteht die Möglichkeit, da die pigmentierten Styrolpolymerisatpartikel im Gegensatz zu den weißen pigmentfreien, meist gefärbt, insbesondere schwarz sind, optisch erkennbare Muster in bestimmter Form im Werkstoff auszubilden, die beispielsweise den ästhetischen Gesamteindruck verbessern. Solche Muster können aber auch zur Übermittlung von Informationen genutzt werden.

In einer weiteren Alternative können bei einer systematischen Anordnung der pigmentierten Styrolpolymerisatpartikel in einer bestimmten Einfärbung auch Schichten gebildet werden, um eine lokale gezielte Beeinflussung der mechanischen und thermischen Eigenschaften des Werkstoffes erreichen zu können.

Eine solche Schicht kann beispielsweise mittig innerhalb eines plattenförmigen aus einem erfindungsgemäß hergestellten Werkstoff gebildeten Körpers angeordnet sein. Solche Schichten können auch Oberflächen analog wie Deckschichten, bilden. Selbstverständlich ist es auch möglich, dass auf derartige plattenförmigen Werkstoffen die wie vorstehend beschrieben, erfindungsgemäß aufgebaut sind, auch noch Haftvermittler für den weiteren Schichtaufbau aufgebracht sein.

Der erfindungsgemäße Werkstoff in Plattenform kann auch, da er u. a. auch für die Wärmedämmung vorgesehen ist, mit einer unterschiedlichen Kantenausbildung z. B. nach dem Nut-/Federprinzip versehen sein.

Überraschenderweise hat es sich nun gezeigt, dass der Werkstoff nach der Erfindung z. B. bei einer Rohdichte von ca. 15 g/l nicht nur die Wärmeleitfähigkeitsklasse 035 erfüllt, sondern dass dieser Werkstoff gleichzeitig keine oder nur unwesentliche Veränderungen auch unter einer längeren thermischen Beanspruchung aufweist. Der Werkstoff nach der vorliegenden Erfindung vereint somit die Vorteile des Werkstoffes der EP 0 981 575 B1 mit den günstigen Eigenschaften in Bezug auf die thermischen Formveränderungen wie sie von pigmentfreien, d.h. von Styroporschaumstoffen bekannt ist.

Durch die vorteilhaften thermischen und mechanischen Eigenschaften des erfindungsgemäßen geschäumten Werkstoffes wirken sich auch auftretende unterschiedliche Wärmeausdehnungen in reduzierter Form aus, so dass auch vermieden werden kann, dass in solchen Fugenbereichen Risse in solchen Beschichtungen oder Überzügen auftreten.

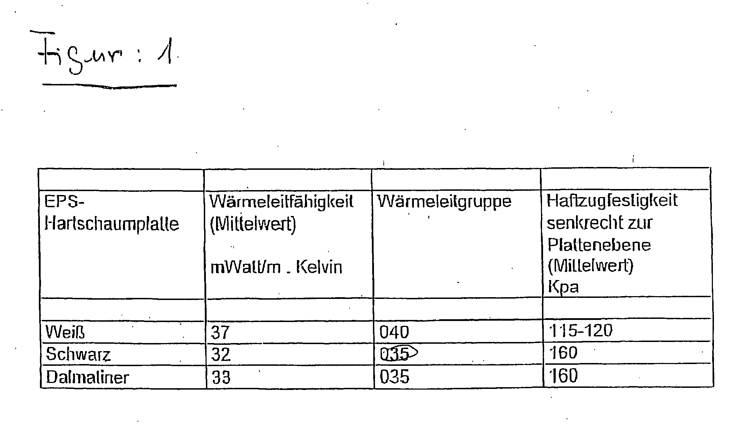

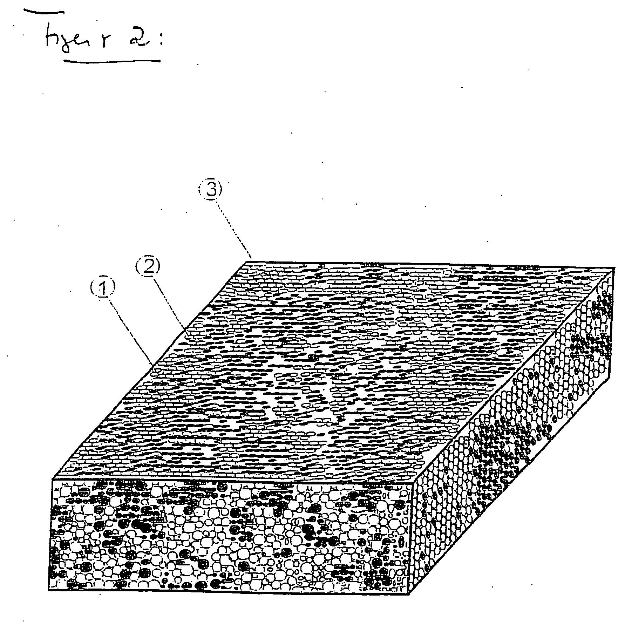

Nachfolgend wird die Erfindung mit Beispielen und anhand den Figuren 1 und 2 näher erläutert.
- Figur 1: gibt die Messwerte die an beispielhaften Platten gefunden wurden an.
- Fig. 2: zeigt einen erfindungsgemäßen Werkstoff 3 in Plattenform. Die pigmentierten Styrolpolymerisatpartikel 1 enthalten Graphitpartikel und sind unregelmäßig in Werkstoff 3 verteilt. Mit 2 sind dabei die pigmentfreien Styrolpolymerisatpartikel bezeichnet.

### Beispiel:

Die in den Beispielen hergestellten Platten wurden unter gleichen Bedingungen unter Verwendung einheitlicher Verfahrensparameter und der gleichen Maschine hergestellt.

Ein erfindungsgemäßer Werkstoff wird aus vorexpandierten Polystyrolpolymerisatpartikeln (Styroporpartikel F 215 der Firma BASF) und zu gleichen Anteilen (50 Gew.-%) aus mit Graphit pigmentierten Polystyrolpolymerisatpartikel (Neopor der Firma BASF) hergestellt. Die erhaltene Platte zeigte aufgrund der schwarzen Neopor-Partikel, eine schwarz-weiße Oberfläche (Dalmatiner). Er erreichte eine Dichte von 15,6 kg/m³ und es konnte eine Wärmeleitfähigkeit nach DIN 52612 bei 23 °C unter Verwendung eines Messgerätes der Firma Hesto in Höhe von 32,8 mW/m*K erreicht werden.

Im Vergleich hierzu konnte mit einem pigmentfreien geschäumten Werkstoff (weiß) nach dem Stand der Technik, der eine Dichte von 14,77 kg/ m³ aufwies, eine Wärmeleitfähigkeit von 37,9 mW/m*K und für einen rein graphitpigmentierten geschäumten Werkstoff, der eine Dichte von 17,38 kg/m³ aufwies, eine Wärmleitfähigkeit von 32,2 mW/m*K ermittelt werden.

Der pigmentfreie geschäumte Werkstoff nach dem Stand der Technik erreichte eine Haftzugfestigkeit senkrecht zu einer Plattenebene von 115 bis 120 kPa. Der rein graphitpigmentierte geschäumte Werkstoff, ebenfalls nach dem Stand der Technik erreichte eine entsprechende Haftzugfestigkeit von 160 kPa und der erfindungsgemäße geschäumte Werkstoff, der aus schwarzen (Graphit) und weißen (pigmentfrei) aufgeschäumten Partikeln hergestellt worden ist, erreichte eine Haftzugfestigkeit von 160 kPa. Die Messwerte sind in der Tabelle der Figur 1 zusammengestellt.

## Patentansprüche

1. Dämmender geschäumter Werkstoff der aus expandierbaren Styrolpolymerisatpartikel gebildet ist,
**dadurch gekennzeichnet,**
**dass** er aus pigmententhaltenden und pigmentfreien Styrolpolymerisatpartikel gebildet ist, wobei die pigmentierten Styrolpolymerisatpartikel unregelmäßig im Werkstoff angeordnet sind.

2. Werkstoff nach Anspruch 1, **dadurch gekennzeichnet, dass** die Pigmente der pigmententhaltenden Styrolpolymerisatpartikel aus Ruß, Metalloxide, Metallpulver, Farbstoffpigmente und/oder Graphit ausgewählt sind.

3. Werkstoff nach Anspruch 2, **dadurch gekennzeichnet, dass** die pigmententhaltenden Styrolpolymerisatpartikel Graphitpartikel in einer homogenen Verteilung enthalten.

4. Werkstoff nach einem der vorhergehenden Ansprüche, **dadurch gekennzeichnet, dass** er aus 10 bis 90 Gew.-% pigmentierten Styrolpolymerisatpartikel und 90 bis 10 Gew.-% pigmentfreien Styrolpolymerisatpartikel gebildet ist.

5. Werkstoff nach Anspruch 4, **dadurch gekennzeichnet, dass** er aus mindestens 30 Gew.-% pigmentierter Styrolpolymerisatpartikel gebildet ist.

6. Werkstoff nach mindestens einem der vorhergehenden Ansprüche, **dadurch gekennzeichnet, dass** seine Wärmeleitfähigkeit soweit erniedrigt ist, dass sie den Anforderungen der Wärmeleitklasse 035 (nach DIN 18164, Teil 1) genügt.

7. Verwendung des Werkstoffes nach mindestens einem der Ansprüche 1 bis 6, zur Wärmedämmung von Gebäuden und Gebäudeteilen.

## Claims

1. Insulating foamed material which has been formed from expandable styrene polymer particles, **characterized in that** it has been formed from pigment-containing and pigment-free styrene polymer particles, with the pigmented styrene polymer particles being arranged irregularly in the material.

2. Material according to Claim 1, **characterized in that** the pigments of the pigment-containing styrene polymer particles are selected from among carbon black, metal oxides, metal powders, colour pigments and graphite.

3. Material according to Claim 2, **characterized in that** the pigment-containing styrene polymer particles contain graphite particles in a homogeneous distribution.

4. Material according to any of the preceding claims, **characterized in that** it has been formed from 10 to 90% by weight of pigmented styrene polymer particles and from 90 to 10% by weight of pigment-free styrene polymer particles.

5. Material according to Claim 4, **characterized in that** it has been formed from at least 30% by weight of pigmented styrene polymer particles.

6. Material according to at least one of the preceding claims, **characterized in that** its thermal conductivity has been reduced to such an extent that it satisfies the requirements of thermal conductivity class 035 (in accordance with DIN 18164, Part 1).

7. Use of the material according to at least one of Claims 1 to 6 for the thermal insulation of buildings and components of buildings.

## Revendications

1. Matériau expansé isolant formé de particules de polymère de styrène expansibles,
**caractérisé en ce qu'**il est formé de particules de polymère de styrène contenant des pigments et exemptes de pigments, les particules de polymère de styrène contenant des pigments étant disposées irrégulièrement dans le matériau.

2. Matériau selon la revendication 1, **caractérisé en ce que** les pigments des particules de polymère de styrène contenant des pigments sont choisis parmi la suie, les oxydes métalliques, les poudres métalliques, les pigments colorants et/ou le graphite.

3. Matériau selon la revendication 2, **caractérisé en ce que** les particules de polymère de styrène contenant des pigments comportent des particules de graphite en distribution homogène.

4. Matériau selon l'une quelconque des revendications précédentes , **caractérisé en ce qu'**il est formé de 10 à 90 % en poids de particules de polymère de styrène pigmentées et de 90 à 10 % en poids de particules de polymère de styrène exemptes de pigments.

5. Matériau selon la revendication 4, **caractérisé en ce qu'**il est formé d'au moins 30 % en poids de particules de polymère de styrène pigmentées.

6. Matériau selon au moins l'une quelconque des revendications précédentes, **caractérisé en ce que** sa conductibilité thermique est assez réduite pour qu'elle satisfasse aux exigences de la classe de conductibilité thermique 035 (selon la norme DIN 18164, partie 1).

7. Utilisation du matériau selon au moins l'une quelconque des revendications 1 à 6 pour l'isolation thermique de bâtiments et de parties de bâtiment.
